# EUROPÄISCHE PATENTSCHRIFT

(11) **EP 0 474 097 B1**
(45) Veröffentlichungstag und Bekanntmachung des Hinweises auf die Patenterteilung: **25.10.1995**
(21) Anmeldenummer: 91114362.6
(22) Anmeldetag: 27.08.1991
(51) Int. Cl.: B62B 3/10

(54) **Einkaufswagen für Selbstbedienungsgeschäfte**
Shopping trolley for self-service shops
Chariot d'achats pour les magasins à libre service

(30) Priorität: 27.08.1990 DE 9012289 U
(43) Veröffentlichungstag der Anmeldung: 11.03.1992
(73) Patentinhaber: Brüder Siegel GmbH + Co. KG Draht- und Metallwarenfabrik, 89336 Leipheim (DE)
(72) Erfinder: Siegel, Franz, W-8874 Leipheim/Donau (DE)
(74) Vertreter: Dorner, Jörg, Dr.-Ing.

(56) Entgegenhaltungen:
- DE-A- 3 111 616
- US-A- 3 645 554
- US-A- 4 116 456

## Beschreibung

Die Erfindung betrifft einen Einkaufswagen für Selbstbedienungsgeschäfte, welcher über einem von Schwenkrollen abgestützten Fahrgestellrahmen einen Warenkorb aufweist, dessen Korbrückwand zur Stapelung gleichartiger Einkaufswagen nach einwärts und aufwärts schwenkbar ist, mit in dieser Korbrückwand vorgesehenen, nebeneinanderliegenden, bis zu oder nahe dem unteren Rand der Korbrückwand reichenden Öffnungen zum Durchstecken der Beine eines Kindes und mit einer nahe dem in der Gebrauchslage unteren Rand dieser Öffnungen angelenkten Kindersitzklappe, die zur Verwendung aus der Ebene der Korbrückwand heraus in den Warenkorbinnenraum hineinschwenkbar ist. Solche Einkaufswagen sind aus der DE-A-3 111 616 bekannt.

Bei anderen bekannten stapelbaren Einkaufswagen mit Kindersitz an der schwenkbaren Korbrückwand erstrecken sich die Öffnungen zum Durchstecken der Beine des Kindes etwa vom oberen Rand der Korbrückwand bis beispielsweise auf die halbe Höhe dieser Korbwand. Hier ist die Kindersitzklappe angelenkt, welche in der Verstaustellung in eine Position parallel zur Ebene der schwenkbaren Korbrückwand geklappt ist und in der Gebrauchsstellung aus dieser Ebene herausgeklappt wird, um eine Sitzfläche für das Kind zu bieten. In der Gebrauchsstellung wird die Kindersitzklappe dieser bekannten Einkaufswagen durch eine am unteren Rand der schwenkbaren Korbrückwand angelenkte Lenkeranordnung gehalten, welche auch als Rücklehne des Kindersitzes dient.

Werden bekannte gleichartige Einkaufswagen mit Kindersitz in die Verstaustellung gefahren und ineinandergestapelt, so stößt die Rücklehne des in einen vorausfahrenden Einkaufswagen eingeschobenen, zu stapelnden Einkaufswagens gegen den hinteren Korbrand des vorausfahrenden Einkaufswagens und wird in die Ebene der zugehörigen Korbrückwand gedrückt, wobei gleichzeitig die Kindersitzklappe hochgeklappt wird.

Bestimmte Einkaufswagen, beispielsweise für Selbstbedienungs-Gartencenters, werden mit Warenkörben geringer Tiefe ausgestattet, derart, daß hier eine Kindersitzkonstruktion herkömmlicher Bauart und die zugehörigen Mechanismen zur Rückführung des Kindersitzes in die Verstaustellung in der Ebene der schwenkbaren Korbrückwand nicht verwendbar sind.

Aufgabe der Erfindung ist es demgemäß, einen Einkaufswagen der eingangs beschriebenen Art für Selbstbedienungsgeschäfte so auszubilden, daß bei geringer Warenkorbtiefe ein sicherer Sitzplatz zum Mitführen eines Kindes geschaffen wird und das Ineinanderstapeln gleichartiger Einkaufswagen durch die Kindersitzkonstruktion nicht behindert wird.

Diese Aufgabe wird erfindungsgemäß durch einen Einkaufswagen mit den Merkmalen des Patentanspruches 1 gelöst.

Eine weitere erfindungsgemäße Lösung ist durch die Merkmale von Patentanspruch 2 verwirklicht.

Dadurch, daß bei der erstgenannten erfindungsgemäßen Lösung der Mitnehmerbügel, und bei der zweitgenannten Lösung die Kindersitzklappe selbst mit Bezug auf die Gebrauchslage der Korbrückwand etwas oberhalb von deren durchgehendem unteren Rand an der Korbrückwand angelenkt sind, gelangen die Korbrückwand und die Kindersitzklappe dann, wenn von rückwärts ein gleichartiger Einkaufswagen zur Herstellung der Verstaustellung eingeschoben wird, in eine gestreckte Lage relativ zueinander und werden, wenn diese Stellung erreicht ist, schließlich gemeinsam in dem Korbinnenraum aufwärts geschwenkt, ohne daß die Kindersitzklappe in den Korbinnenraum des eingeschobenen Warenkorbes hineinfällt. Beim vollständigen Einschieben des nachfolgenden Einkaufswagens und seines Warenkorbes gelangt die Kindersitzklappe auch nicht in den Innenraum des Warenkorbes des eingeschobenen Einkaufswagens, welcher andernfalls nicht mehr von dem vorausfahrenden Einkaufswagen getrennt werden könnte. Vielmehr bleiben die ineinandergeschobenen Einkaufswagen voneinander wieder trennbar, nachdem der Mitnehmerbügel bzw. der freie, quer verlaufende Rand der Kindersitzklappe solche Breite hat, daß er stets auf den oberen Seitenrändern des eingeschobenen Warenkorbes aufliegt.

Ein wesentlicher Vorteil der hier angegebenen Konstruktion eines Einkaufswagens mit Warenkorb geringer Tiefe ist es, daß durch einen einfachen Handgriff die Kindersitzklappe von der Gebrauchslage, in der sie im wesentlichen auf dem Boden des Warenkorbes aufliegt, in die Ebene der schwenkbaren Korbrückwand hochgeklappt werden kann und dann die zum Durchstecken der Beine eines Kindes dienenden Öffnungen der Korbrückwand verschließt, derart, daß bei Verwendung des Einkaufswagens ohne Einsatz der Kindersitzkonstruktion ein Herausfallen von kleinen Gegenständen, beispielsweise kleinen Blumentöpfen, Packungen und dergleichen durch die Öffnungen der Korbrückwand vermieden wird.

Besteht der Boden des Warenkorbes aus einem Gitterrost, so verlaufen zweckmäßig die Roststäbe hier auf der Korbinnenseite in Längsrichtung. Diese Roststäbe ermöglichen dann ein störungsfreies Gleiten des querverlaufenden freien Randes der Kindersitzklappe bzw. des Bügelquersteges des Mitnehmerbügels.

Nachfolgend werden zwei Ausführungsformen anhand der Zeichnung näher beschrieben. Es stellen dar:
**Fig. 1** eine schematische Teildarstellung eines Einkaufswagens mit schwenkbarer Korbrückwand und Kindersitzklappe in perspektivischer Darstellung und
Fig. 2 eine gegenüber Figur 1 abgewandelte Raumform des hier angegebenen Einkaufswagens.

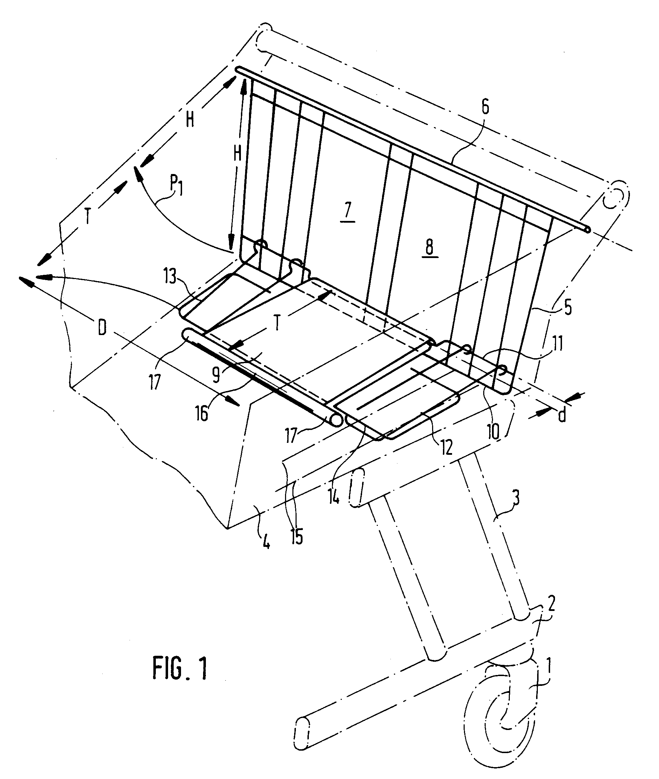

In Figur 1 ist ein stapelbarer Einkaufswagen für Selbstbedienungsgeschäfte im Ausschnitt und in strichpunktierten Linien schematisch angegeben. Ein von Schwenkrollen 1 abgestützter, sich in Fahrtrichtung verjüngender, U-förmiger Fahrgestellrahmen 2 trägt an Holmen 3 einen sich ebenfalls in Fahrtrichtung verjüngenden Warenkorb 4 im wesentlich gebräuchlicher Gestalt. Bei dem gezeigten Ausführungsbeispiel hat der Warenkorb verhältnismäßig geringe Tiefe. Die Korbrückwand 5 ist an einer längs ihres oberen Randes verlaufenden Schwenkachse 6 zwischen den Korbseitenwänden derart schwenkbar gelagert, daß sich die Korbrückwand 5 beim Einschieben eines gleichartigen Einkaufswagens zur Herstellung der Verstaustellung in den Korbinnenraum nach aufwärts und einwärts verschwenken kann, wie durch den Pfeil P 1 angedeutet ist.

In der Korbrückwand 5 sind zwei nebeneinanderliegende Öffnungen 7 und 8 zum Durchstecken der Beine eines beim Einkauf mitzuführenden Kindes vorgesehen, das auf einer im wesentlichen auf dem Boden des Warenkorbes 4 aufliegenden Kindersitzklappe 9 Platz nehmen kann.

Die Kindersitzklappe 9 hat bei dem in Figur 1 gezeigten Ausführungsbeispiel eine Breite etwa entsprechend dem Abstand der äußeren Ränder der Öffnungen 7 und 8. Wird also die Kindersitzklappe um ihre Schwenklagerung nahe dem unteren Rand der Korbrückwand 5 hochgeklappt, so vermag sie die Öffnungen 7 und 8 abzudecken, so daß das Herausfallen kleiner Gegenstände aus dem Warenkorb vermieden wird, wenn der betreffende Einkaufswagen verwendet wird, ohne daß ein Kind mitgeführt wird.

Parallel zu dem unteren, durchgehenden Gitterstab 10 der Korbrückwand 5 verläuft in verhältnismäßig geringem Abstand von diesem ein Gitterstab 11, der im Bereich der Öffnungen 7 und 8 mit Bezug auf die Gebrauchslage der Korbrückwand 5 in Richtung auf den Korbinnenraum nach einwärts abgekröpft ist und in einem Abstand d von der Ebene der Korbrückwand 5 parallel zu dieser versetzt verläuft. Der Abstand d entspricht etwa der Dicke der Kindersitzklappe 9, so daß diese verschwenkt werden kann, ohne durch die zwischen den Öffnungen 7 und 8 verlaufenden Gitterstäbe der Korbrückwand 5 an der Schwenkbewegung wesentlich gehindert zu werden. Diejenigen Abschnitte des Gitterstabes 11, welche im wesentlichen in der Ebene der Korbrückwand 5 verlaufen und an den senkrechten Gitterstäben festgeschweißt sind, dienen zur Lagerung von in Korblängsrichtung langgestreckten, U-förmigen Bügeln 12 und 13, die miteinander durch einen an ihnen jeweils festgeschweißten C-Bügel 14 verbunden sind. Dessen in Querrichtung verlaufende Traverse verläuft unter der Kindersitzklappe 9, wie aus Figur 1 ohne weiteres zu erkennen ist. Die Bügel 12, 13 und 14 bilden eine Mitnehmerbügelanordnung, die, wenn die Korbrückwand 5 in dem Korbinnenraum nach einwärts und aufwärts geschwenkt wird, mit den der Schwenklagerung jeweils naheliegenden Bügelschenkelabschnitten an dem unteren Gitterstab 10 der Korbrückwand 5 anstößt und dann in gestreckter Stellung relativ zur Korbrückwand 5 mit dieser mitgenommen wird, wenn die Korbrückwand 5 ihre Aufwärts-Schwenkbewegung fortsetzt. Die Traverse des C-Bügels 14 nimmt ihrerseits die Kindersitzklappe 9 nach aufwärts mit. Beim Herstellen der Verstaustellung und dem Ineinanderschieben gleichartiger Einkaufswagen schiebt also die Korbrückwand 5 während ihrer Aufwärts-Schwenkbewegung zunächst den freien Querrand der Kindersitzklappe 9 und die Scheitel der Bügel 12 und 13 auf dem Boden des Warenkorbes 4 vorwärts und hebt dann die gesamte Anordnung aus den Bügeln 12 bis 14 und der Kindersitzklappe 9 bei der Fortsetzung der Schwenkbewegung an, wobei die Korbrückwand 5 und die Kindersitzklappe sowie die Mitnehmerbügelanordnung im wesentlichen in einer gemeinsamen Ebene liegend verschwenkt werden. Das Gleiten des freien Kindersitzklappenrandes bzw. der Bügeltraversen auf dem Warenkorbboden wird dadurch begünstigt, daß die Gitterrostlängsstäbe 15 auf der Innenseite des Warenkorbes verlaufend angeordnet werden.

Bei der in Figur 1 gezeigten Ausführungsform ist der freie Querrand der Kindersitzklappe 9 als eine Leiste 16 ausgebildet, die seitlich, wie bei 17 gezeigt, über die Kindersitzfläche hinaus verlängert ist, derart, daß die Ansätze 17 gegen die seitlichen Begrenzungen der Öffnungen 7 bzw. 8 der Korbrückwand 5 hinausstehen und sich gegen die hier befindlichen senkrechten Gitterstäbe abstützen. Auf diese Weise wird ein Anschlag für die Kindersitzklappe an ihren Seiten in der Abdeckstellung relativ zu den Öffnungen 7 und 8 geschaffen.

Die Breite der Traverse der aus den Bügeln 12, 13 und 14 gebildeten Mitnehmerbügelanordnung ist so gewählt, daß sie etwas geringer ist, als die Warenkorbbreite D in einem Abstand vom hinteren Korbende entsprechend der Summe der Korbrückwandhöhe H und der Kindersitztiefe T. Die Bedeutung dieser Bemessung ist, daß der freie Querrand der Kindersitzklappe und die wirksame Traverse der Mitnehmerbügelanordnung keinesfalls in den Korbinnenraum eines eingeschobenen Warenkorbes hinabsinken können, so daß ineinandergestapelte Einkaufswagen entsprechend der Konstruktion nach Figur 1 sicher voneinander trennbar bleiben.

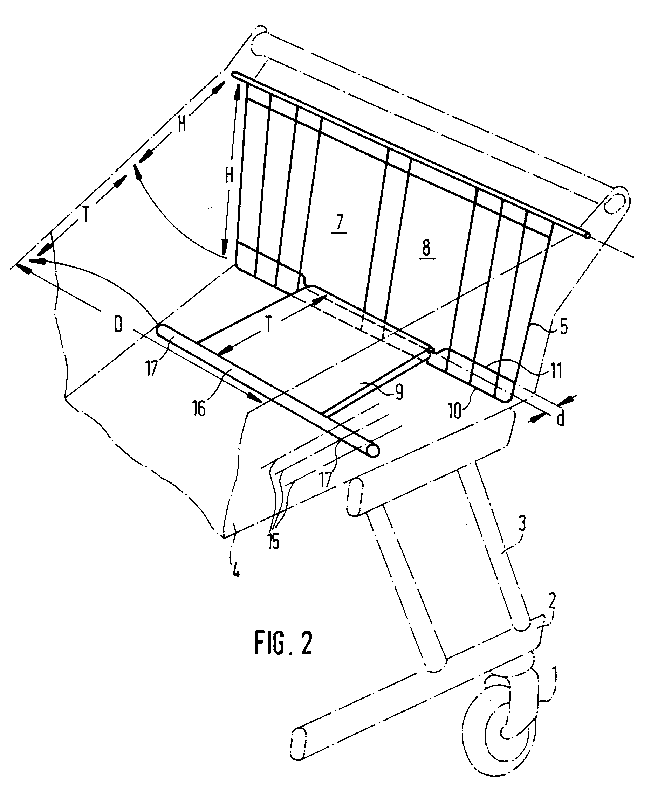

Die Ausführungsform nach Figur 2 ist gegenüber der Konstruktion nach Figur 1 vereinfacht ausgebildet. Der Einkaufswagen nach Figur 2 enthält bei im übrigen ähnlichem Aufbau eine Kindersitzklappe 9, bei der die seitlichen Ansätze 17 der Randleiste 16 in Richtung auf die Korbseitenwände so weit verlängert sind, daß die Randleiste 16 insgesamt als Mitnehmer wirkt, dessen Breite quer zur Korblängsrichtung etwas geringer ist als die Breite des Warenkorbes in einem Abstand vom hinteren Korbende entsprechend der Summe von Korbrückwandhöhe H und Kindersitzklappentiefe T. Die Bedeutung dieser Bemessungsregel ist bei der Beschreibung des Ausführungsbeispiels nach Figur 1 schon angegeben worden.

Die Kindersitzklappe 9 ist an der Korbrückwand 5 in bestimmtem Vertikalabstand mit Bezug auf die Gebrauchslage von dem unteren Gitterstab 10 an den Gitterstab 11 gelagert. Im Lagerungsbereich kann wiederum eine Kröpfung des Gitterstabes 11 in Richtung auf das Korbinnere hin vorgesehen sein, um die Kindersitzklappe an den Gitterstäben der Korbrückwand zwischen den Öffnungen 7 und 8 vorbeischwenken zu können.

Wird die Korbrückwand 5 nach einwärts hochgeschwenkt, dann nimmt von einer bestimmten Schwenkstellung ab der untere Gitterstab 10 nach Anlaufen gegen die Unterseite der Kindersitzklappe 9 diese nach aufwärts mit, wobei die Kindersitzklappe 9 im wesentlichen in der Ebene der Korbrückwand liegend bewegt wird. Beim weiteren Einschieben eines nachfolgenden, zu stapelnden Einkaufswagens gleicher Art stützen sich auf dessen Korbseitenrändern die seitlichen Ansätze 17 der Kindersitzklappe 9 ab und verhindern ein Absinken der Kindersitzklappe in den Korbinnenraum des eingeschobenen Einkaufswagens.

Die vorliegend angegebene Konstruktion gestattet es, Kunststoff-Kindersitzklappen einzusetzen, die sich nicht über die gesamte Breite der Korbrückwand erstrecken, so daß Kunststoffmaterial eingespart wird.

Bei der Ausführungsform nach Figur 2 kann die Mitnehmerbügelanordnung aus den Bügeln 12, 13 und 14 (siehe Ausführungsbeispiel nach Figur 1) entfallen, da die seitlichen Ansätze 17 der Kindersitzklappe 9 und das Zusammenwirken der Unterseite der Kindersitzklappe mit dem unteren Gitterstab 10 der Korbrückwand die Mitnehmerfunktion erfüllen.

## Patentansprüche

1. Einkaufswagen für Selbstbedienungsgeschäfte, welcher über einem von Schwenkrollen (1) abgestützten Fahrgestellrahmen (2) einen Warenkorb aufweist, dessen Korbrückwand (5) zur Stapelung gleichartiger Einkaufswagen nach einwärts und aufwärts schwenkbar ist, mit in dieser Korbrückwand vorgesehenen, nebeneinanderliegenden, bis zu oder nahe dem unteren Rand der Korbrückwand (5) reichenden Öffnungen (7, 8) zum Durchstecken der Beine eines Kindes und mit einer nahe dem in der Gebrauchslage unteren Rand dieser Öffnungen angelenkten Kindersitzklappe (9), die zur Verwendung aus der Ebene der Korbrückwand heraus in den Warenkorbinnenraum hineinschwenkbar ist, dadurch gekennzeichnet, daß oberhalb des unteren, durchgehenden Randes (10) der Korbrückwand beidseits der Schwenklagerung der Kindersitzklappe (9) und im wesentlichen auf gleicher Höhe an der Korbrückwand (5) eine Mitnehmerbügelanordnung (12, 13, 14) angelenkt ist, deren quer zur Korblängsrichtung orientierter Bügelsteg einerseits größere Breite als die Kindersitzklappe (9) und andererseits geringere Breite als der Warenkorb in einem Abstand vom hinteren Korbende entsprechend der Summe von Korbrückwandhöhe (H) und Kindersitzklappentiefe (T) hat und unter der Kindersitzklappe hindurch verläuft.

2. Einkaufswagen für Selbstbedienungsgeschäfte, welcher über einem von Schwenkrollen (1) abgestützten Fahrgestellrahmen (2) einen Warenkorb (4) aufweist, dessen Korbrückwand (5) zur Stapelung gleichartiger Einkaufswagen nach einwärts und aufwärts schwenkbar ist, mit in dieser Korbrückwand vorgesehenen, nebeneinanderliegenden, bis zu oder nahe dem unteren Rand der Korbrückwand (5) reichenden Öffnungen (7, 8) zum Durchstecken der Beine eines Kindes und mit einer nahe dem in der Gebrauchslage unteren Rand dieser Öffnungen angelenkten Kindersitzklappe (9), die zur Verwendung aus der Ebene der Korbrückwand heraus in den Warenkorbinnenraum hineinschwenkbar ist und die etwas oberhalb des unteren durchgehenden Randes (10) der Korbrückwand (5) an dieser angelenkt ist, dadurch gekennzeichnet, daß der vom angelenkten Rand abliegende Rand der Kindersitzklappe als freier Rand ausgebildet ist und insbesondere als Mitnehmer (16, 17) gestaltet ist und eine Breite aufweist, die geringer ist als die Breite des Warenkorbes (4) in einem Abstand vom hinteren Korbende entsprechend der Summe von Korbrückwandhöhe (H) und Kindersitzklappentiefe (T).

3. Einkaufswagen nach Anspruch 1 oder 2, dadurch gekennzeichnet, daß die Kindersitzklappe (9) aus Kunststoff besteht.

4. Einkaufswagen nach einem der Ansprüche 1 bis 3, dadurch gekennzeichnet, daß die Kindersitzklappe (9) an einem Gitterrohrstab (11) der Korbrückwand (5) gelagert ist, der parallel zu dem unteren Rand (10) der Korbrückwand in geringem Abstand von diesem verläuft und im Bereich der Anlenkung der Kindersitzklappe und der Öffnungen (7, 8) der Korbrückwand in Richtung auf den Korbinnenraum abgekröpft ist und im wesentlichen entsprechend der Dicke (d) der Kindersitzklappe (9) einwärts versetzt verläuft.

5. Einkaufswagen nach einem der Ansprüche 1 bis 4, dadurch gekennzeichnet, daß als unterer Rand (10) der Korbrückwand (5) ein Gitterroststab vorgesehen ist, der dazu bestimmt ist, sich beim Hochschwenken der Korbrückwand von unten an die Mitnehmerbügelanordnung bzw. an die Kindersitzklappe anzulegen und eine Verschwenkung dieser Teile beim Hochschwenken der Korbrückwand über eine zu dieser gestreckte Stellung hinaus zu verhindern.

6. Einkaufswagen nach einem der Ansprüche 1 bis 5, dadurch gekennzeichnet, daß die Gitterroststäbe (15) des Boden-Gitterrostes des Warenkorbes (4) auf der Korbinnenseite in Längsrichtung verlaufen.

## Claims

1. Shopping trolley for self-service stores, which features a goods basket on a chassis (2) supported by swivel-mounted castors (1), the rear wall (5) of said basket being pivotable inwards and upwards for the purpose of stacking said trolley with other similar trolleys, with openings (7, 8) located adjacent to one another in said rear wall (5) which extend down as far or almost as far as the bottom edge of the rear wall (5) of the basket to accommodate a child's legs, and with a child seat flap (9) pivot-mounted in the position of use at the bottom edge of these openings, the child seat being operated by tilting inwards into the goods basket interior from the plane of the rear wall of the basket, characterized in that, pivot-mounted on the basket rear wall (5) above its bottom continuous edge (10) with locations at at both sides of, and essentially at the same height as, the pivot mounting arrangement for the child seat flap (9), is a carrier bracket arrangement (12, 13, 14), of which the bracket stay oriented transverse to the longitudinal direction of the basket on the one hand is wider than the child seat flap (9) and on the other hand is narrower than the goods basket at a distance from the rear end of the basket corresponding to the sum of basket rear wall height (H) and child seat flat depth (T), and runs under the child seat flap.

2. Shopping trolley for self-service stores, which features a goods basket (4) on a chassis (2) supported by swivel-mounted castors (1), the rear wall (5) of said basket being pivotable inwards and upwards for the purpose of stacking said trolley with other similar trolleys, with openings (7, 8) located adjacent to one another in said rear wall (5) which extend down as far or almost as far as the bottom edge of the rear wall (5) of the basket to accommodate a child's legs, and with a child seat flap (9) pivot-mounted in the position of use at the bottom edge of these openings, the child seat being operated by tilting inwards into the goods basket interior from the plane of the rear wall of the basket and being pivot-mounted to the rear wall (5) of the basket a little above the continuous bottom edge (10) of said rear wall (5), characterized in that the edge of the child seat flap furthest from the pivoting edge has the form of a free edge and in paricular is designed as a carrier (16, 17), having a width which is less than the width of the goods basket (4) at a distance from the rear end of the basket corresponding to the sum of basket rear wall height (H) and child seat flat depth (T).

3. Shopping trolley according to Claim 1 or 2, characterized in that the child seat flap (9) is made of plastic.

4. Shopping trolley according to one of Claims 1 to 3, characterized in that the child seat flap (9) is mounted on a lattice bar (11) of the basket rear wall (5) running parallel to, and a small distance from, the bottom edge (10) of said basket rear wall, and being inwardly cranked towards the basket interior in the region of the pivot mounting arrangement of the child seat flap and the openings (7, 8) in the basket rear wall, with the inward displacement essentially corresponding to the thickness (d) of the child seat flap (9).

5. Shopping trolley according to one of Claims 1 to 4, characterized in that a lattice bar is provided as the bottom edge (10) of the rear wall (5) of the basket, which is intended to rest against the carrier bracket arrangement and the child seat flap when the rear wall of the basket is tilted upwards from below, and to prevent the pivoting of these parts when the rear wall of the basket is tilted upwards beyond an extended position relative thereto.

6. Shopping trolley according to one of Claims 1 to 5, characterized in that the lattice bars (15) of the framework forming the floor of the goods basket (4) run lengthwise along the inside of the basket.

## Revendications

1. Chariot d'achats pour magasins à libre service, lequel présente au-dessus d'un cadre porteur (2) supporté par des roulettes (1) un panier à marchandises dont le fond arrière (5) est basculable vers l'intérieur et vers le haut pour permettre l'empilement des chariots du même type, comportant dans ledit fond arrière des ouvertures (7, 8) disposées l'une à côté de l'autre et s'étendant jusqu'au ou à proximité du bord inférieur du fond arrière (5) du panier pour passer les jambes d'un enfant, et comportant un abattant de siège enfant (9) fixé à proximité du bord inférieur desdites ouvertures en position de service, lequel est basculable du plan du fond arrière du panier vers l'intérieur du panier à marchandises, caractérisé en ce qu'au-dessus du bord inférieur continu (10) du fond arrière du panier, de part et d'autre du support pivotant de l'abattant de siège enfant (9) et essentiellement à la même hauteur, est articulé sur le fond arrière (5) du panier un dispositif d'entraînement en étrier (12, 13, 14) dont la traverse d'étrier orientée perpendiculairement par rapport au sens longitudinal du panier est d'une part plus large que l'abattant de siège enfant (9) et d'autre part moins large que le panier à marchandises à une distance calculée à partir de l'extrémité arrière du panier, qui correspond à la somme de la hauteur (H) du fond arrière du panier et de la profondeur (T) de l'abattant de siège enfant, et passe sous l'abattant de siège enfant.

2. Chariot d'achats pour magasins à libre service, lequel présente au-dessus d'un cadre porteur (2) supporté par des roulettes (1) un panier à marchandises (4) dont le fond arrière (5) est basculable vers l'intérieur et vers le haut pour permettre l'empilement des chariots du même type, comportant dans ledit fond arrière des ouvertures (7, 8) placées l'une à côté de l'autre et s'étendant jusqu'au ou à proximité du bord inférieur du fond arrière (5) du panier pour passer les jambes d'un enfant, et comportant un abattant de siège enfant (9) articulé à proximité du bord inférieur desdites ouvertures en position de service, lequel est basculable du plan du fond arrière du panier vers l'intérieur du panier à marchandises lorsque l'on veut l'utiliser, et est articulé au fond arrière (5) du panier, sensiblement au-dessus du bord inférieur continu (10) de celui-ci caractérisé en ce que le bord de l'abattant de siège enfant, qui est opposé au bord articulé, se présente sous forme de bord libre et est conçu en particulier comme dispositif d'entraînement (16, 17) et présente une largeur qui est inférieure à la largeur du panier à marchandises (4) à une distance calculée à partir de l'extrémité arrière du panier, qui correspond à la somme de la hauteur (H) du fond arrière du panier et de la profondeur (T) de l'abattant de siège enfant.

3. Chariot d'achats selon la revendication 1 ou 2, caractérisé en ce que l'abattant de siège enfant (9) est en matière plastique.

4. Chariot d'achats selon l'une des revendications 1 à 3, caractérisé en ce que l'abattant de siège enfant (9) est fixé sur une barre de treillis (11) du fond arrière (5) du panier, laquelle s'étend de manière parallèle par rapport au bord inférieur (10) du fond arrière, à faible distance de celui-ci, et est coudée vers l'intérieur du panier au niveau de l'articulation de l'abattant de siège enfant et des ouvertures (7, 8) du fond arrière du panier et est essentiellement décalée vers l'intérieur en fonction de l'épaisseur (d) de l'abattant de siège enfant (9).

5. Chariots d'achats selon l'une des revendications 1 à 4, caractérisé en ce que le bord inférieur (10) du fond arrière (5) du panier est formé par une barre de treillis qui, lors du basculement du fond arrière du panier vers le haut, est destinée à se mettre par en-dessous contre le dispositif d'entraînement en étrier ou l'abattant de siège enfant et à éviter un pivotement de ces éléments lors du basculement du fond arrière du panier vers le haut au-delà d'une position allongée par rapport audit fond arrière.

6. Chariot d'achats selon l'une des revendications 1 à 5, caractérisé en ce que les barres de treillis (15) du treillis de fond du panier à marchandises (4) s'étendent sur le côté intérieur du panier dans le sens longitudinal.
